# FASCICULE DE BREVET EUROPEEN

(11) **EP 1 154 170 B1**
(45) Date de publication et mention de la délivrance du brevet: **27.09.2006**
(21) Numéro de dépôt: 01401069.8
(22) Date de dépôt: 26.04.2001
(51) Int. Cl.: F16D 59/02, F16D 55/40

(54) **Système de freinage d'un rotor par rapport à un stator**
Einrichtung zum Bremsen eines Rotors gegenüber einem Stator
Device for braking a rotor with respect to a stator

(30) Priorité: 10.05.2000 FR 0005926
(43) Date de publication de la demande: 14.11.2001
(73) Titulaire: POCLAIN HYDRAULICS INDUSTRIE, 60411 Verberie (FR)
(72) Inventeur: Fontaine, Jacques, 60410 Verberie (FR); Manon, Claude, 02600 Retheuil (FR); Vidal, Stéphane, 60126 Longueil Ste Marie (FR)
(74) Mandataire: Intes, Didier Gérard André

(56) Documents cités:
- US-A- 3 999 634
- US-A- 4 557 109
- US-A- 5 595 214

## Description

La présente invention concerne un système de freinage d'un rotor par rapport à un stator, comprenant des premiers moyens de freinage solidaires du rotor, des deuxièmes moyens de freinage solidaires du stator, un piston de frein susceptible d'occuper une position de défreinage et une position de freinage dans laquelle il sollicite les premiers et deuxièmes moyens de freinage en coopération de freinage, le système comprenant, en outre, des moyens de rappel élastique sollicitant en permanence le piston de frein vers sa position de freinage, une chambre de freinage susceptible d'être alimentée en fluide sous pression pour solliciter le piston de frein vers sa position de freinage, une chambre de défreinage susceptible d'être alimentée en fluide sous pression pour solliciter le piston de frein vers sa position de défreinage et des moyens de commande de l'alimentation en fluide desdites chambres.

Le système de freinage est par exemple celui d'un moteur hydraulique, le rotor pouvant être constitué par le bloc-cylindres ou par le carter du moteur, selon que ce dernier est un bloc-cylindres tournant ou à came tournante. Il s'agit par exemple d'un moteur à pistons radiaux, du type décrit dans les documents EP 0 869 279 ou EP 0 887 548.

Les moyens de freinage sont par exemple constitués par des lamelles de frein, respectivement solidaires en rotation du stator et du rotor et intercalées les unes entre les autres. D'autres moyens de freinage, utilisant par exemple les dents d'un crabot, peuvent être envisagées.

Lorsque la chambre de défreinage n'est pas alimentée en fluide sous pression, le piston de frein est amené dans sa position de freinage par les moyens de rappel élastique. Cette situation de freinage est par exemple celle d'un stationnement prolongé.

Dans certaines conditions, l'alimentation en fluide de la chambre de freinage peut être utilisée à titre d'assistance au freinage, pour conforter l'effet de freinage obtenu par les moyens de rappel élastique.

C'est ce que prévoient, par exemple, les documents US 3 680 666, US 4 057 297 et US 3 547 234.

Le document US 4 557 109 montre, quant à lui, un système dans lequel une chambre contenant les moyens de rappel élastique communique avec la chambre de défreinage par une restriction qui est ménagée dans le piston de frein de telle sorte que, lorsque ce dernier atteint sa position de défreinage, cette restriction est fermée. Ceci permet de vidanger la chambre de défreinage, sans recourir à un drain ou à un clapet navette spécifique.

Comme indiqué précédemment, pendant un arrêt prolongé, le freinage de stationnement est utilisé, sous le seul effet des moyens de rappel élastique. Pour autoriser la rotation du rotor, on opère un défreinage en alimentant en fluide sous pression la chambre de défreinage, de manière à déplacer le piston de frein à l'encontre de l'effort de rappel des moyens de rappel élastique. Toutefois, il est parfois alors difficile d'opérer un freinage d'urgence. En effet, après un arrêt prolongé, la température du fluide diminue et sa viscosité augmente. Ce phénomène est accentué lorsque la température ambiante est basse, par exemple inférieure à 0°C. Pour opérer un freinage, il est nécessaire de cesser d'alimenter en fluide la chambre de défreinage et de vidanger cette dernière. Du fait de sa viscosité élevée, le fluide s'évacue difficilement de la chambre de défreinage, ce qui maintient dans cette chambre une pression antagoniste à la poussée des moyens de rappel. Ceci empêche le frein de se serrer dans un bref laps de temps.

L'invention vise à remédier à cet inconvénient, en permettant un freinage rapide et fiable, même peu de temps après une mise en rotation du rotor suivant un arrêt prolongé.

Ce but est atteint grâce au fait que la chambre de freinage et la chambre de défreinage sont raccordées par un conduit de liaison servant à générer une circulation de fluide dans une situation de freinage assisté dans laquelle la chambre de freinage est raccordée à un conduit d'alimentation en fluide, tandis que la chambre de défreinage est raccordée à un conduit de retour de fluide et au fait que le conduit de liaison est équipé de moyens pour limiter la circulation du fluide dans ledit conduit au moins dans le sens allant de la chambre de défreinage vers la chambre de freinage.

Grâce à ces dispositions, il est possible de freiner rapidement le rotor par rapport au stator en assistant l'effet de rappel des moyens de rappel élastique par une alimentation en fluide de la chambre de freinage, ce qui permet un freinage même lorsque le fluide est "froid", c'est-à-dire lorsque sa viscosité est plus élevée que celle qu'il présente dans une situation de fonctionnement stabilisé. Dans le même temps, la chambre de freinage est raccordée à la chambre de défreinage, ce qui permet une circulation du fluide entre les deux chambres. Cette circulation favorise un réchauffement rapide du fluide et donc une diminution de sa viscosité, de sorte que les problèmes évoqués précédemment disparaissent rapidement.

Le conduit de liaison est réalisé de telle sorte que, pendant la phase de freinage assisté, les efforts exercés sur le piston du fait des moyens de rappel élastique et de la pression de fluide dans la chambre de freinage, soient supérieurs aux éventuels efforts antagonistes dus à la persistance d'une pression de fluide dans la chambre de défreinage. Lors de cette phase de freinage assisté, le fluide visqueux s'évacue difficilement de la chambre de défreinage, mais il circule également relativement difficilement entre la chambre de freinage et la chambre de défreinage, de sorte que l'on tire finalement profit de la viscosité élevée du fluide pour réaliser l'effet de freinage assisté.

Toutefois, la circulation du fluide dans le conduit de liaison est limitée dans le sens allant de la chambre de défreinage vers la chambre de freinage, de sorte qu'une situation de défreinage classique est tout de même obtenue.

Avantageusement, les moyens pour limiter la circulation du fluide comprennent un clapet anti-retour permettant seulement la circulation du fluide dans le sens allant de la chambre de freinage vers la chambre de défreinage.

Avantageusement, le système comporte une restriction disposée dans le conduit de liaison entre la chambre de freinage et la chambre de défreinage.

Cette restriction limite la circulation de fluide en fonction de sa section. Elle est avantageusement disposée en série dans le conduit de liaison avec le clapet anti-retour. Dans ce cas, le clapet empêche la circulation de fluide dans le conduit de liaison dans le sens allant de la chambre de défreinage à la chambre de freinage. Dans l'autre sens, cette circulation est limitée par la section de la restriction, ce qui permet de s'assurer qu'une pression de fluide suffisante règne dans la chambre de freinage lorsque celle-ci est alimentée en fluide sous pression.

Selon un mode de réalisation avantageux, les moyens de commande de l'alimentation en fluide des chambres de freinage et de défreinage sont susceptibles de commander une configuration de freinage assisté dans laquelle la chambre de freinage communique avec la conduite d'alimentation en fluide, tandis que la chambre de défreinage communique avec la conduite de retour de fluide, une configuration de défreinage dans laquelle la chambre de défreinage communique avec la conduite d'alimentation en fluide et une configuration de freinage simple dans laquelle la chambre de défreinage communique avec un retour de fluide, tandis que la chambre de freinage est isolée de la conduite d'alimentation en fluide.

Grâce à ces dispositions, il est loisible de n'utiliser la configuration de freinage assisté que dans une situation critique, en particulier celle qui se produit au démarrage, lorsque la viscosité du fluide est plus élevée que la normale. Lorsque le caractère critique de cette situation disparaît, le freinage peut être opéré de manière simple, sans consommation de fluide pour alimenter la chambre de freinage.

Dans ce cas, le système comporte avantageusement des moyens pour détecter un paramètre ayant une relation avec la viscosité du fluide dans la chambre de défreinage et des moyens pour commander le freinage dans la configuration de freinage assisté lorsque le paramètre détecté est révélateur d'une viscosité supérieure à une viscosité donnée et pour commander le freinage dans la configuration de freinage simple lorsque ledit paramètre est révélateur d'une viscosité inférieure à ladite viscosité donnée.

Ainsi, lorsque le freinage est commandé, le choix entre un freinage assisté et un freinage simple s'opère automatiquement, en fonction du paramètre détecté.

Par exemple, ce paramètre est choisi parmi la température du fluide, une perte de charge et la température d'une pièce du système en contact avec le fluide.

Avantageusement, les moyens de freinage sont situés dans la chambre de défreinage. Le fluide qui est à leur contact est ainsi plus rapidement réchauffé.

L'invention sera bien comprise et ses avantages apparaîtront mieux à la lecture de la description détaillée qui suit, d'un mode de réalisation représenté à titre d'exemple non limitatif. La description se réfère aux dessins annexés, sur lesquels :
- les figures 1, 2 et 3 sont des vues en coupe axiale, selon deux variantes, d'un système de freinage conforme à l'invention ; et
- les figures 4 et 5 illustrent, selon deux variantes, les circuits de commande d'un tel système de freinage.

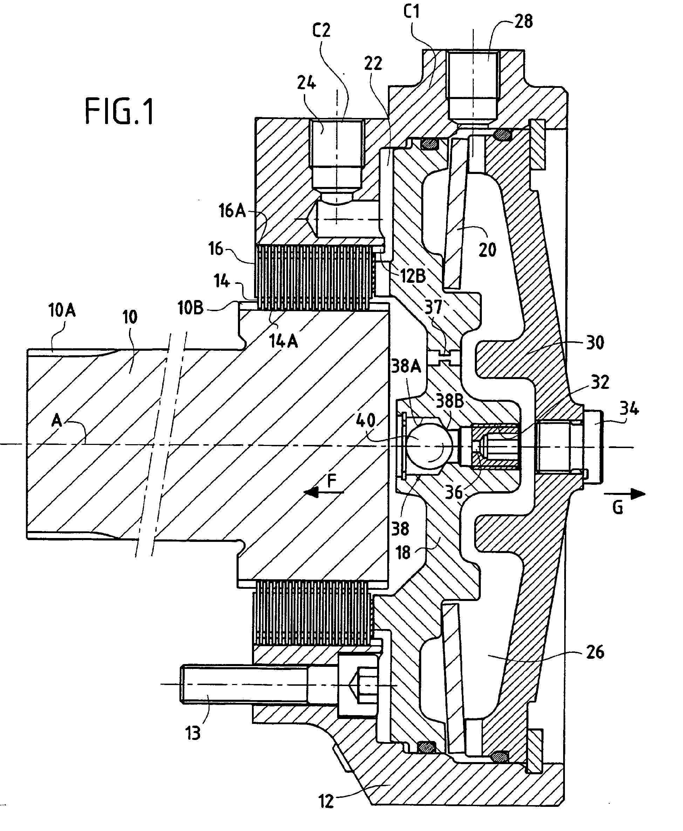

Sur la figure 1, le rotor est constitué par un arbre 10, par exemple un arbre d'un moteur hydraulique capable, par des cannelures 10A, d'être entraîné en rotation par le bloc-cylindres de ce moteur. Le stator est quant à lui constitué par une partie 12 du carter de frein, par exemple solidaire du carter du moteur par des vis 13. Les premiers moyens de freinage comprennent une première série de lamelles annulaires de frein 14 qui sont solidaires en rotation du rotor 10 par leurs extrémités intérieures 14A et qui coopère avec des cannelures ou analogues 10B équipant le rotor. Les deuxièmes moyens de freinage comprennent une deuxième série de lamelles annulaires de frein 16 qui, par leur périphérie extérieure 16A, sont solidaires en rotation du stator 12, par exemple à l'aide d'un système de cannelures 12B. De manière classique, les lamelles des première et deuxième séries sont imbriquées les unes entre les autres.

Le système de freinage comporte un piston de freinage 18 apte à coopérer avec les lamelles. Du côté opposé au piston, les lamelles sont maintenues en butée (par un organe de butée non représenté). Ainsi, lorsque le piston est déplacé vers les lamelles, dans le sens F, il pousse ces lamelles les unes contre les autres pour réaliser le freinage. Lorsque le piston est déplacé dans le sens G opposé, les lamelles peuvent s'écarter les unes des autres et permettre la rotation du rotor.

Le piston 18 est sollicité en permanence vers sa position de freinage par un ressort de rappel 20 tel qu'une rondelle élastique du type Belleville, qui le repousse dans le sens F.

Une chambre de défreinage 22 est ménagée du côté du piston tourné vers les lamelles de frein. Par un conduit de défreinage 24, elle peut être alimentée en fluide sous pression pour solliciter le piston dans le sens G.

Dans l'exemple avantageux représenté, les lamelles de frein 14 et 16 sont disposées dans cette chambre 22. Du côté du piston opposé à la chambre 22, le système comprend une chambre de freinage 26 qui peut être alimentée par un conduit de freinage 28 pour, en supplément du ressort 20, solliciter ledit piston dans le sens F.

La chambre 26 est délimitée entre la face du piston de frein 18 qui est opposée aux lamelles 14 et 16 et un couvercle de frein 30 en forme de flasque. Des dispositifs d'étanchéité sont prévus entre la pièce 12 du carter de frein et le piston 18 d'une part, et entre la pièce 12 et le couvercle 30 d'autre part.

En situation de stationnement, lorsque le système n'est pas alimenté en fluide, le ressort 20 opère un freinage de stationnement. Il peut toutefois être souhaitable de réaliser un défreinage de secours, par exemple pour remorquer un véhicule équipé d'un moteur comprenant un système de frein conforme à l'invention. Pour ce faire, le piston de frein 18 présente un taraudage 32. Le couvercle 30 présente un perçage qui, en situation de fonctionnement, est obturé par un bouchon 34. Pour opérer le défreinage de secours, le bouchon 34 peut être enlevé et une vis de défreinage de secours, dont la tête prend appui sur le couvercle 30, peut coopérer avec le taraudage 32 pour rappeler le piston de frein dans le sens G. Auparavant, une pièce 36 dont la fonction sera précisée dans la suite et qui était initialement disposée dans le taraudage 32, a été enlevée par dévissage.

La chambre de freinage 26 et la chambre de défreinage 22 sont raccordées par un conduit de liaison 38. Ainsi, lorsque la chambre 26 est alimentée en fluide, ce fluide peut circuler de la chambre de freinage 26 dans la chambre de défreinage 22 par le conduit 38. En l'espèce, ce dernier comprend une première partie 38A, dans laquelle est disposé un organe mobile tel qu'une bille 40 permettant, en coopérant avec un siège 38B, de former un clapet anti-retour s'opposant à la circulation de fluide dans le sens allant de la chambre de défreinage 22 vers la chambre de freinage 26. Dans l'exemple avantageux représenté, la deuxième partie de ce conduit de liaison est constituée par le taraudage 32 précédemment évoqué, et la pièce 36 constitue une restriction qui définit une section de passage donnée, ayant par exemple un diamètre de l'ordre de 2 mm.

Le conduit de liaison 38 est réalisé de manière simple en mettant à profit le taraudage 32 nécessaire au défreinage de secours. En l'espèce, ce conduit est centré sur l'axe de rotation A du rotor.

Dans la mesure où le piston de frein sépare la chambre de freinage de la chambre de défreinage, il est avantageux de réaliser le conduit de liaison dans ce piston, ce qui est le cas sur la figure 1. Il est également possible de le réaliser dans le carter de frein 12.

Par ailleurs, le ressort 20 est disposé dans la chambre de freinage 26.

Un passage inverse 37 muni d'une restriction peut autoriser la circulation de fluide depuis la chambre de défreinage 22, dans la chambre de freinage 26. Il peut être équipé d'un clapet anti-retour inversé par rapport au clapet 40 ou bien, comme sur la figure 1, autoriser la circulation du fluide dans les deux sens entre les chambres 22 et 26. La section du passage 37 est très faible et, de préférence, inférieure à celle de la restriction 36. Elle présente par exemple un diamètre de l'ordre de 0,5 mm. Ce passage 37 génère une fuite entre la chambre 22 et la chambre 26. Comme dans le brevet US 4 557 109, il facilite la vidange de la chambre de défreinage 22. On peut l'équiper de moyens permettant son obturation en situation de défreinage stabilisée (par exemple en fonction de la position du piston 18), pour éviter que la fuite de la chambre 22 ne soit permanente.

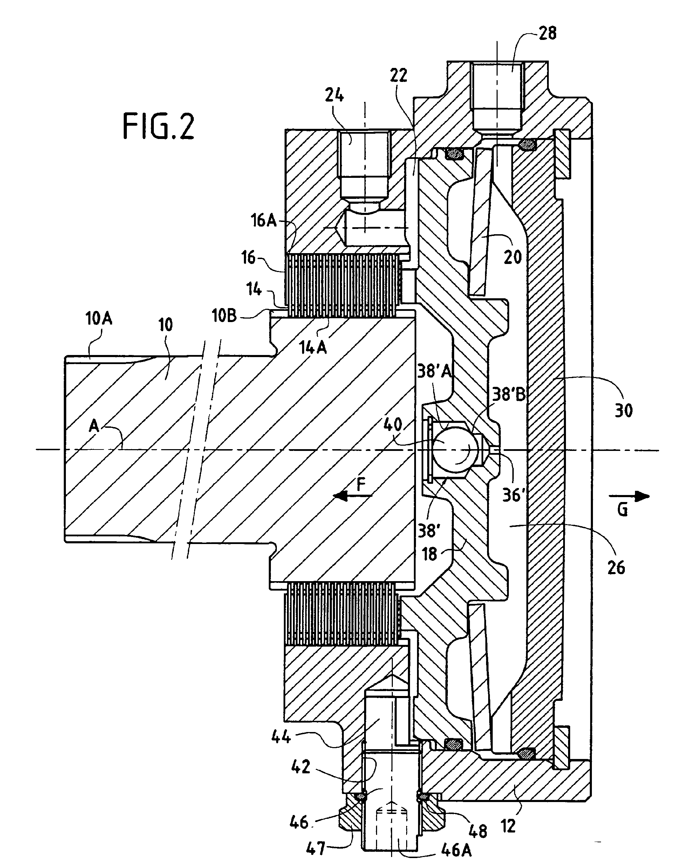

La figure 2 montre un système analogue à celui de la figure 1, dans lequel le conduit de liaison 38' comporte également une première partie 38'A, dans laquelle est disposé un organe mobile 40 formant clapet anti-retour en coopérant avec un siège 38'B, ainsi qu'une restriction 36' constituée par une portion du conduit 38' de section appropriée. Ce conduit de liaison 38' est également ménagé dans le piston 18, en étant centré sur l'axe A.

Dans la variante de la figure 2, les moyens de défreinage de secours sont différents de ceux de la figure 1. En effet, le flasque formant le couvercle 30 du frein est plein, mais les moyens de défreinage de secours sont accessibles depuis une face axiale du système, réalisée sur un côté axial du carter 12. En effet, un perçage radial 42 est ménagé dans la paroi axiale du carter de telle sorte que, sur une partie de sa longueur située vers l'intérieur du système, il présente une ouverture sur la chambre de défreinage 22 qui est tournée vers le piston de défreinage 18.

Dans ce perçage 42 est disposée un téton en forme de came 44 pouvant être tourné depuis l'extérieur par une tige de commande 46, qui est filetée et qui coopère avec une portion taraudée du perçage 42. Le téton 44 est arrêté en rotation par un contre-écrou 47, une étanchéité étant réalisée par un joint 48. La tige 46 présente une tête d'actionnement 46A. A l'aide d'un outil, on peut la faire tourner par exemple d'un quart de tour pour placer une région de grand diamètre de la came en regard du piston 18 et pousser ainsi ce dernier dans le sens G. En situation de fonctionnement normal, c'est une portion de petit diamètre de la came qui se trouve en regard du piston.

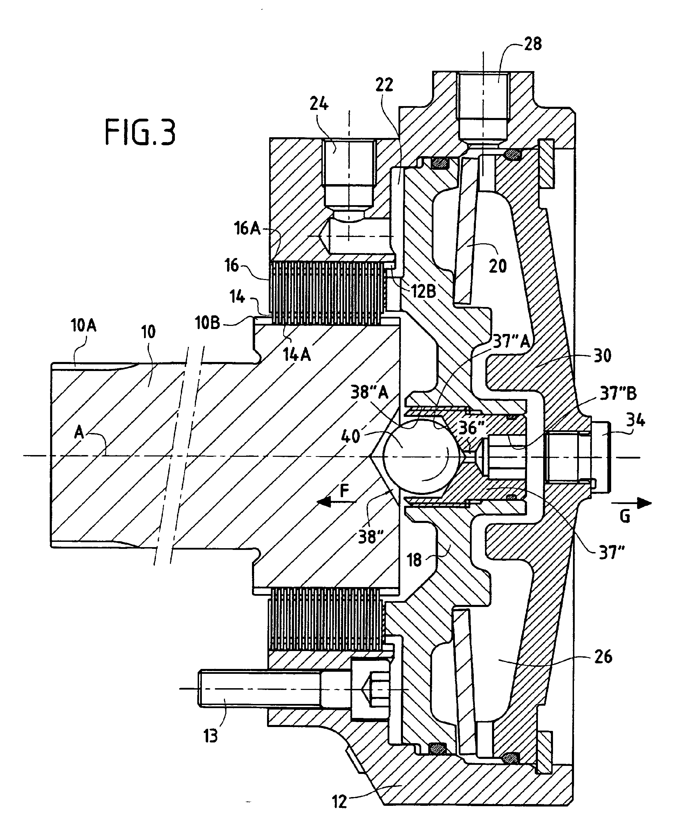

Sur la figure 3, le système est analogue à ceux des figures 1 et 2 et des références identiques sont adoptées pour les éléments similaires. Le conduit de liaison 38" est formé par un perçage, qui est réalisé dans le piston de frein 18 et qui comporte une partie taraudée 38"A. Une pièce 37" présentant un perçage 36" qui forme la restriction est vissée dans cette partie taraudée. La pièce 37" présente une paroi 37"A, tournée vers la chambre de défreinage 22, qui forme un siège pour la bille 40 du clapet anti-retour.

Du côté du bouchon 34, la pièce 37" présente une surface 37"B d'engagement pour un outil d'entraînement en rotation. Pour réaliser le défreinage de secours, on enlève le bouchon 34 et on fait tourner la pièce 37" de telle sorte qu'elle avance dans le sens F. La bille 40 vient en appui sur l'arbre 10 de telle sorte qu'en continuant la rotation de la pièce 37", on déplace le piston de frein 18 dans le sens G.

Avec les systèmes de freinage représentés sur les figures 1 à 3, le freinage de stationnement peut être obtenu par le seul effet de rappel du ressort 20. Le défreinage permettant la rotation du rotor est quant à lui obtenu par l'alimentation en fluide de la chambre 22, par le conduit 24. A partir d'une telle situation de défreinage, un freinage assisté peut être obtenu en raccordant le conduit 24 à un retour de fluide, pour permettre l'évacuation de la chambre 22, et en raccordant le conduit 28 à une alimentation, pour permettre l'alimentation en fluide de la chambre de freinage 26. Dans ce cas, le fluide introduit dans la chambre 26 circule par le conduit de liaison 38, 38' ou 38" dans la chambre de défreinage 22, pour s'évacuer par le conduit 24. On génère ainsi une circulation de fluide qui favorise le réchauffement de ce dernier et la diminution de sa viscosité. Le diamètre de la restriction 36 ou 36' permet de s'assurer que, dans cette situation de freinage assisté, la pression de fluide soit suffisante dans la chambre de freinage pour déplacer le piston dans le sens F même si le fluide s'évacue difficilement par le conduit 24 en raison d'une viscosité élevée.

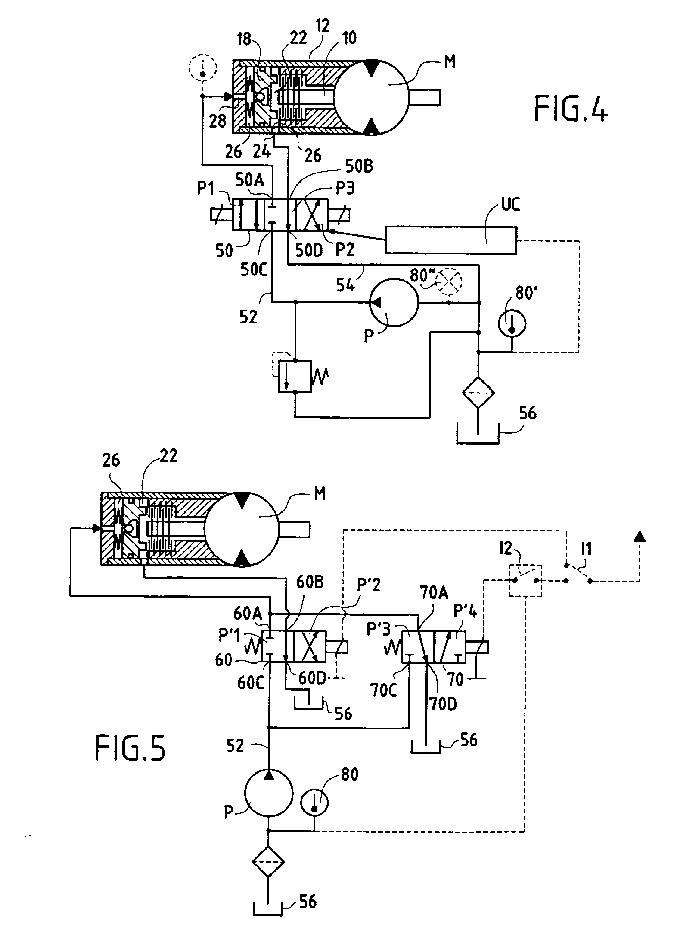

La figure 4 montre un circuit de commande d'un système de freinage conforme à l'invention. Ce système est utilisé pour freiner un moteur hydraulique M. On reconnaît ainsi le rotor 10 constituant l'arbre de frein et le stator 12 qui constitue une partie de carter du moteur. On reconnaît également la chambre de défreinage 22, son conduit de défreinage 24, ainsi que la chambre de freinage 26 et son conduit de freinage 28.

Le circuit d'alimentation en fluide comprend une pompe P, par exemple la pompe de gavage d'un circuit hydraulique dont la pompe principale (non représentée) alimenterait le moteur M. La valve 50 de commande du système de frein, par exemple une électrovalve, est capable d'occuper trois positions.

La valve 50 comporte quatre voies, respectivement une voie de freinage 50A qui est raccordée en permanence à la chambre de freinage 26 par la conduite de freinage 28, une voie de défreinage 50B qui est raccordée en permanence à la chambre de défreinage 22 par la conduite 24, une voie d'alimentation 50C raccordée en permanence à la conduite d'alimentation 52 reliée à l'orifice de refoulement de la pompe P et une voie de retour 50D raccordée en permanence à la conduite de retour 54.

Le retour de fluide 54 est raccordé à un réservoir sans pression 56. De manière avantageuse, la conduite 54 raccorde la voie de retour 50D à l'aspiration de la pompe P. On obtient ainsi un circuit plus court, qui favorise la montée en température du fluide et du circuit de commande. Ainsi, en l'espèce, la conduite 54 est à la fois raccordée à l'aspiration de la pompe et au réservoir 56.

Dans la position P1, les voies 50A et 50C sont raccordées entre elles en étant isolées des voies 50B et 50D qui sont elles-mêmes raccordées entre elles, de sorte que la valve 50 raccorde le conduit de freinage 28 à l'alimentation en fluide 52, tandis qu'elle raccorde le conduit de défreinage 24 avec le retour de fluide 54.

Cette position P1 correspond à une configuration de freinage assisté.

La valve 50 comporte une deuxième position P2, dans laquelle les voies 50A et 50D sont raccordées entre elles, tout en étant isolées des voies 50B et 50C qui sont elles-mêmes raccordées entre elles, de sorte que les conduites 28 et 24 sont respectivement reliées à la conduite de retour de fluide 54 et à la conduite d'alimentation en fluide 52. Cette deuxième position correspond donc à la configuration de défreinage, dans laquelle la chambre de défreinage est alimentée en fluide.

La valve 50 comporte encore une troisième position P3, dans laquelle les voies 50A et 50C sont isolées, tandis que les voies 50B et 50D sont raccordées entre elles, de sorte que la conduite 28 est isolée, tandis que la conduite 24 est raccordée à la conduite de retour de fluide 54. Ceci correspond à une configuration de freinage simple.

Dans l'exemple représenté sur la figure 4, la conduite de freinage 28 est isolée de toute autre conduite dans la configuration de freinage simple. Il faut noter que le fluide contenu dans la chambre de freinage 26 a pu se vidanger dans la chambre de défreinage 22 par le conduit de liaison, pendant la situation de défreinage qui a précédé cette configuration de freinage simple. On peut plutôt choisir, dans la configuration de freinage simple, de raccorder la conduite de freinage 28 directement à une conduite de retour de fluide, voire au réservoir sans pression 56, auquel cas dans la position P3, la voie 50A peut être reliée au retour 54, par exemple en étant raccordée à la voie 50D.

La figure 5 montre une variante du circuit de commande du même système de freinage. Ce circuit comprend deux valves, respectivement 60 et 70, qui ont chacune deux positions permettant de commander le système de freinage entre ses configurations de freinage assisté, de freinage simple et de défreinage.

La première valve 60 comprend quatre voies, à savoir une voie de freinage 60A raccordée en permanence à la chambre de freinage 26, une voie de défreinage 60B raccordée en permanence à la chambre de défreinage 22, une voie d'alimentation 60C raccordée en permanence à la conduite d'alimentation 52 reliée au refoulement de la pompe P, et une voie de retour 60D raccordée en permanence à un retour de fluide, par exemple le réservoir sans pression 56.

La deuxième valve à deux positions 70 présente une voie de dérivation de freinage 70A qui est raccordée en permanence à la chambre de freinage 26, une voie de dérivation d'alimentation 70C qui est raccordée en permanence à la conduite d'alimentation 52, et une voie de conduite de retour 70D qui est raccordée en permanence au retour de fluide tel que le réservoir 56.

La valve 60 est représentée dans une première position P'1, dans laquelle elle relie les voies de défreinage 60B et de retour 60D, en isolant les voies de freinage 60A et d'alimentation 60C. Cette position P'1 est appelée position de freinage. Cette valve 60 peut en outre adopter une position de défreinage P'2, dans laquelle ses voies de freinage 60A et de retour 60D sont reliées, tandis que ses voies de défreinage 60B et d'alimentation 60C sont raccordées entre elles, tout en étant isolées des autres voies.

La deuxième valve 70 est représentée dans une position P'3, dite position neutre, dans laquelle ses voies de dérivation de freinage 70A et de conduite de retour 70D sont reliées en étant isolées de la voie 70C. Elle peut occuper une deuxième position P'4, dite position d'assistance au freinage, dans laquelle la voie de dérivation de freinage 70A est reliée à la voie de dérivation d'alimentation 70C en étant isolée de la voie 70D.

On comprend que, lorsque la valve 70 occupe sa position neutre P'3, la configuration de freinage simple est obtenue dans la position P'1 de la valve 60, tandis que la configuration de défreinage est obtenue dans la position P'2.

En revanche, lorsque la valve 70 occupe sa position d'assistance au freinage P'4, la configuration de freinage assisté est obtenue lorsque la valve 60 est dans sa position P'1, tandis que la position P'2 ne peut pas être utilisée (elle raccorderait sinon le refoulement de la pompe au réservoir 56).

Le système de commande des valves 60 et 70, constituées en l'espèce par des électrovalves, comprend un premier interrupteur I1 qui commande la valve 60 entre ses positions P'1 et P'2. Il comprend également un deuxième interrupteur I2 qui permet de commander la valve 70 entre ses positions P'3 et P'4, P'4 n'étant commandée que si P'2 ne l'est pas. L'interrupteur I1 est activé par l'utilisateur du système de freinage, par exemple le conducteur d'un véhicule équipé de ce système. L'interrupteur I2 est de préférence actionné automatiquement, par exemple en fonction d'un paramètre détecté par un détecteur 80. Lorsque ce paramètre est révélateur d'une viscosité inférieure à une viscosité donnée, alors l'interrupteur I2 est automatiquement fermé pour commander la position P'4 de la valve 70. Dans ce cas, lorsque le conducteur actionnera l'interrupteur I1, la configuration de freinage sera obligatoirement une configuration de freinage assisté. Lorsque, en revanche, le paramètre détecté révèle une viscosité suffisamment faible, l'interrupteur I2 pourra être automatiquement ouvert pour commander la position P'3 de la valve 70, de sorte que, en fonction de la position de l'interrupteur I1, on passera d'une configuration de défreinage à une configuration de freinage simple.

Dans l'exemple de la figure 4, la valve est commandée entre ses trois positions par des systèmes électriques gérés par une unité de contrôle UC en fonction d'un paramètre, détecté par un détecteur 80', révélant la viscosité du fluide. Pour une viscosité jugée suffisamment faible, la valve 50 sera commandée de sa position P2 à sa position P3 pour réaliser un freinage simple, tandis que, tant que la viscosité restera supérieure à une viscosité donnée, elle sera commandée de sa position P2 à sa position P1 pour réaliser un freinage assisté.

Par exemple, le paramètre détecté peut être la température du fluide au voisinage de l'orifice d'aspiration de la pompe P, comme l'indiquent les positions des détecteurs 80 et 80' en trait plein. Par exemple, la viscosité sera jugée insuffisante tant que cette température restera inférieure à 50°F, soit environ 10°C. Comme indiqué en trait interrompu sur la figure 4, le capteur de température peut être disposé en d'autres endroits, par exemple à l'entrée de la chambre de freinage 28.

Sur la figure 1, on a indiqué différentes positions possibles du capteur, qui peut par exemple être placé sur le corps du stator (position C1), ou bien dans la conduite 24 (position C2). Le paramètre détecté peut être la température, mais il peut également s'agir d'une perte de charge au travers d'une restriction donnée, par exemple un filtre placé sur l'aspiration de la pompe, ou de la température d'une pièce en contact avec le fluide, comme la température du stator. Les capteurs 80 et 80' représentés en trait plein sont des capteurs de température. Le capteur 80" représenté en trait interrompu sur la figure 3 est un capteur de pression. Les données préenregistrées selon des abaques permettront, à partir de la valeur de ce paramètre, de déterminer la viscosité. Bien entendu, la viscosité sera jugée appropriée en fonction de différents paramètres propres au système envisagé, et en particulier en fonction du diamètre de la conduite 24.

Il faut noter que le fait de disposer les moyens de freinage 14 et 16 dans la chambre de défreinage permet, en situation de fonctionnement du rotor, de réchauffer le fluide de défreinage contre des pièces en mouvement relatif, de sorte que sa viscosité diminue plus rapidement.

En pratique, le démarrage du rotor est précédé du démarrage d'un moteur thermique destiné à faire fonctionner la pompe pour générer la circulation de fluide dans le circuit.

On peut prévoir, lors du démarrage de ce moteur après un stationnement prolongé, de placer automatiquement les moyens de commande du système de freinage dans une position correspondant à la configuration de freinage assisté, pour engendrer une circulation de fluide permettant de le réchauffer. Ensuite, on passe à la configuration de défreinage pour autoriser la rotation du rotor. Lors de la première sollicitation du frein, les moyens de commande sont sollicités soit dans la configuration de freinage assisté, soit, si elle existe, dans la configuration de freinage simple, en fonction de la viscosité du fluide.

L'avantage d'une telle procédure de commande est qu'elle permet de ne réaliser une configuration de freinage assisté (donc d'appliquer un couple de freinage élevé) que lorsque cela est nécessaire. Ceci permet de prolonger la durée de vie du frein.

Les circuits représentés sur les figures 4 et 5 peuvent permettre de commander simultanément les freins de plusieurs moteurs d'une même machine ou d'un même engin.

## Revendications

1. Système de freinage d'un rotor (10) par rapport à un stator (12), comprenant des premiers moyens de freinage (14) solidaires du rotor, des deuxièmes moyens de freinage (16) solidaires du stator, un piston de frein (18) susceptible d'occuper une position de défreinage (G) et une position de freinage (F) dans laquelle il sollicite les premiers et deuxièmes moyens de freinage en coopération de freinage, le système comprenant, en outre, des moyens de rappel élastique (20) sollicitant en permanence le piston de frein (18) vers sa position de freinage (F), une chambre de freinage (26) susceptible d'être alimentée en fluide sous pression pour solliciter le piston de frein vers sa position de freinage (F), une chambre de défreinage (22) susceptible d'être alimentée en fluide sous pression pour solliciter le piston de frein vers sa position de défreinage (G) et des moyens de commande de l'alimentation en fluide desdites chambres,
**caractérisé en ce que** la chambre de freinage (26) et la chambre de défreinage (22) sont raccordées par un conduit de liaison (38, 38', 38") servant à générer une circulation de fluide dans une situation de freinage assisté (P1 ; P'1, P'4) dans laquelle la chambre de freinage (26) est raccordée à un conduit d'alimentation en fluide, tandis que la chambre de défreinage (22) est raccordée à un conduit de retour de fluide et **en ce que** le conduit de liaison est équipé de moyens (40, 36, 36', 36") pour limiter la circulation du fluide dans ledit conduit au moins dans le sens allant de la chambre de défreinage vers la chambre de freinage.

2. Système selon la revendication 1, **caractérisé en ce que** lesdits moyens pour limiter la circulation du fluide comprennent un clapet anti-retour (40, 38B, 38'B, 37"A) permettant seulement la circulation du fluide dans le sens allant de la chambre de freinage (26) vers la chambre de défreinage (22).

3. Système selon la revendication 1 ou 2, **caractérisé en ce qu'**il comporte une restriction (36, 36', 36") disposée dans le conduit de liaison (38, 38', 38") entre la chambre de freinage et la chambre de défreinage.

4. Système selon les revendications 2 et 3, **caractérisé en ce que** la restriction (36, 36', 36") et le clapet (40, 38B, 38'B, 37"A) sont disposés en série dans le conduit de liaison (38, 38', 38").

5. Système selon l'une quelconque des revendications 1 à 4, **caractérisé en ce que** le conduit de liaison (38, 38', 38") est disposé dans le piston de frein (18).

6. Système selon l'une quelconque des revendications 1 à 5, **caractérisé en ce que** les moyens de rappel élastique (20) sont disposés dans la chambre de freinage (26).

7. Système selon l'une quelconque des revendications 1 à 6, **caractérisé en ce que** les moyens de commande (50) de l'alimentation en fluide des chambres de freinage (26) et de défreinage (22) sont susceptibles de commander une configuration de freinage assisté (P1 ; P'1, P'4) dans laquelle la chambre de freinage (26) communique (28) avec la conduite d'alimentation (52) en fluide, tandis que la chambre de défreinage (22) communique (24) avec la conduite de retour de fluide (54), une configuration de défreinage (P2 ; P'2, P'3) dans laquelle la chambre de défreinage (22) communique avec la conduite d'alimentation en fluide (52) et une configuration de freinage simple (P3 ; P'1, P'3) dans laquelle la chambre de défreinage (22) communique avec un retour de fluide (54), tandis que la chambre de freinage (26) est isolée de la conduite d'alimentation en fluide.

8. Système selon la revendication 7, **caractérisé en ce qu'**il comporte des moyens (80, 80') pour détecter un paramètre ayant une relation avec la viscosité du fluide dans la chambre de défreinage (22) et des moyens pour commander le freinage dans la configuration de freinage assisté (P1 ; P'1, P'4) lorsque le paramètre détecté est révélateur d'une viscosité supérieure à une viscosité donnée et pour commander le freinage dans la configuration de freinage simple (P3 ; P'1, P'3) lorsque ledit paramètre est révélateur d'une viscosité inférieure à ladite viscosité donnée.

9. Système selon la revendication 8, **caractérisé en ce qu'**il comporte des moyens (80, 80') pour détecter un paramètre choisi parmi la température du fluide, une perte de charge et la température d'une pièce du système en contact avec le fluide.

10. Système selon l'une quelconque des revendications 7 à 9, **caractérisé en ce que** les moyens de commande de l'alimentation en fluide des chambres de freinage (26) et de défreinage (22) comprennent une valve (50) à trois positions qui présente une voie de freinage (50A) raccordée en permanence à la chambre de freinage (26), une voie de défreinage (50B) raccordée en permanence à la chambre de défreinage (22), une voie d'alimentation (50C) raccordée en permanence à la conduite d'alimentation en fluide (52) et une voie de retour (50D) raccordée en permanence à la conduite de retour de fluide (54), et **en ce que** cette valve est susceptible d'occuper une position (P1) de freinage assisté dans laquelle la voie de freinage (50A) est raccordée à la voie d'alimentation (50C), tandis que la voie de défreinage (50B) est raccordée à la voie de retour (50D), une position de défreinage (P2) dans laquelle la voie de défreinage (50B) est raccordée à la voie d'alimentation (50C), tandis que la voie de freinage (50A) est raccordée à la voie de retour (50D) et une position de freinage simple (P3), dans laquelle la voie de défreinage (50B) est raccordée à la voie de retour (50D), tandis que la voie d'alimentation (50C) est isolée.

11. Système selon l'une quelconque des revendications 7 à 9, **caractérisé en ce que** les moyens de commande de l'alimentation en fluide des chambres de freinage (26) et de défreinage (22) comprennent une première valve (60) qui présente une voie de freinage (60A) raccordée en permanence à la chambre de freinage (26), une voie de défreinage (60B) raccordée en permanence à la chambre de défreinage (22), une voie d'alimentation (60C) raccordée en permanence à la conduite d'alimentation en fluide (52) et une voie de retour (60D) raccordée en permanence à un retour de fluide (56), ainsi qu'une deuxième valve (70) qui présente une voie de dérivation de freinage (70A) raccordée en permanence à la chambre de freinage (26), une voie de dérivation d'alimentation (70C) raccordée en permanence à la conduite d'alimentation (52) et une voie de conduite de retour (70D) raccordée à un retour de fluide (56), et **en ce que** la première valve (60) est susceptible d'occuper une position de freinage (P'1) dans laquelle elle relie ses voies de défreinage (60B) et de retour (60D) tout en isolant les voies de freinage (60A) et d'alimentation (60C) et une position de défreinage (P'2) dans laquelle elle relie ses voies de freinage (60A) et de retour (60D) et elle relie ses voies de défreinage (60B) et d'alimentation (60C), tandis que la deuxième valve (70) est susceptible d'occuper une position d'assistance au freinage (P'4) dans laquelle elle raccorde ses voies de dérivation de freinage (70A) et d'alimentation (70C) et une position neutre (P'3) dans laquelle elle raccorde ses voies de dérivation de freinage (70A) et de conduite de retour (70D).

12. Système selon l'une quelconque des revendications 1 à 11, **caractérisé en ce que** la conduite d'alimentation en fluide (52) est reliée à un orifice de refoulement d'une pompe (P) et **en ce que** la conduite de retour de fluide (54) est reliée à un orifice d'aspiration de ladite pompe (P).

13. Système selon l'une quelconque des revendications 1 à 12, **caractérisé en ce que** les premier et deuxième moyens de freinage (14, 16) sont disposés dans la chambre de défreinage.

## Claims

1. A braking system for braking a rotor (10) relative to a stator (12), said braking system comprising first braking means (14) secured to the rotor, second braking means (16) secured to the stator, a brake piston (18) suitable for taking up a brake release position (G) and a braking position (F) in which it urges the first and second braking means into braking co-operation, the system further comprising resilient return means (20) continuously urging the brake piston (18) into its braking position (F), a braking chamber (26) suitable for being fed with a fluid under pressure to urge the brake piston towards its braking position (F), a brake release chamber (22) suitable for being fed with fluid under pressure to urge the brake piston towards its brake release position (G), and control means for controlling feeding said chambers with fluid;
said braking system being **characterised in that** the braking chamber (26) and the brake release chamber (22) are interconnected via a link duct (38, 38', 38") serving to generate a flow of fluid in an assisted braking situation (P1; P'1, P'4) in which the braking chamber (26) is connected to a fluid feed duct, while the brake release chamber (22) is connected to a fluid return duct, and **in that** the link duct is equipped with means (40, 36, 36', 36") for limiting the flow of the fluid through said duct at least in the direction going from the brake release chamber to the braking chamber.

2. A system according to claim 1, **characterised in that** said means for limiting the flow of fluid comprise a non-return valve (40, 38B, 38'B, 37"A) enabling the fluid to flow only in the direction going from the braking chamber (26) to the brake release chamber (22).

3. A system according to claim 1 or 2, **characterised in that** it is provided with a restriction (36, 36', 36") disposed in the link duct (38, 38', 38") between the braking chamber and the brake release chamber.

4. A system according to claim 2 or 3, **characterised in that** the restriction (36, 36', 36") and the valve (40, 38B, 38'B, 37"A) are disposed in series in the link duct (38, 38', 38").

5. A system according to any one of claims 1 to 4, **characterised in that** the link duct (38, 38', 38") is disposed in the brake piston (18).

6. A system according to any one of claims 1 to 5, **characterised in that** the resilient return means (20) are disposed in the braking chamber (26).

7. A system according to any one of claims 1 to 6, **characterised in that** the control means (50) for controlling feeding the braking chamber (26) and the brake release chamber (22) with fluid are suitable for causing the system to take up an assisted braking configuration (P1; P'1, P'4) in which the braking chamber (26) communicates (28) with the fluid feed duct (52) while the brake release chamber (22) communicates (24) with the fluid return duct (54), a brake release configuration (P2; P'2, P'3) in which the brake release chamber (22) communicates with the fluid feed duct (52), and an unassisted braking configuration (P3; P'1, P'3) in which the brake release chamber (22) communicates with a fluid return (54), while the braking chamber (26) is isolated from the fluid feed duct.

8. A system according to claim 7, **characterised in that** it is provided with means (80, 80') for detecting a parameter related to the viscosity of the fluid in the braking chamber (22), and with means for causing braking to take place in the assisted braking configuration (P1; P'1, P'4) whenever the detected parameter reveals viscosity that is greater than a given viscosity, and for causing braking to take place in the unassisted braking configuration (P3; P'1, P'3) whenever said parameter reveals a viscosity lower than said given viscosity.

9. A system according to claim 8, **characterised in that** it is provided with means (80, 80') for detecting a parameter chosen from the temperature of the fluid, a head loss, and the temperature of a part of the system that is in contact with the fluid.

10. A system according to any one of claims 7 to 9, **characterised in that** the means for controlling feeding the braking chamber (26) and the brake release chamber (22) with fluid comprise a three-position valve (50) having a braking port (50A) connected continuously to the braking chamber (26), a brake release port (50B) connected continuously to the brake release chamber (22), a feed port (50C) connected continuously to the fluid feed duct (52) and a return port (50D) connected continuously to the fluid return duct (54), and **in that** the valve is suitable for taking up an assisted braking position (P1) in which the braking port (50A) is connected to the feed port (50C), while the brake release port (50B) is connected to the return port (50D), a brake release position (P2) in which the brake release port (50B) is connected to the feed port (50C), while the braking port (50A) is connected to the return port (50D), and an unassisted braking position (P3) in which the brake release port (50B) is connected to the return port (50D) while the feed port (50C) is isolated.

11. A System according to any one of claims 7 to 9, **characterised in that** the means for controlling feeding the braking chamber (26) and the brake release chamber (22) with fluid comprise a first valve (60) which has a braking port (60A) connected continuously to the braking chamber (26), a brake release port (60B) connected continuously to the brake release chamber (22), a feed port (60C) connected continuously to the fluid feed duct (52), and a return port (60D) connected continuously to a fluid return (56), together with a second valve (70) which has a braking branch port (70A) connected continuously to the braking chamber (26), a feed branch port (70C) connected continuously to the feed duct (52), and a return duct port (70D) connected to a fluid return (56), and **in that** the first valve (60) is suitable for taking up a braking position (P'1) in which it interconnects its brake release port (60B) and its return port (60D) while isolating the braking port (60A) and the feed port (60C), and a brake release position (P'2) in which it interconnects its braking port (60A) and its return port (60D), and it interconnects its brake release port (60B) and its feed port (60C), while the second valve (70) is suitable for taking up a braking assistance position (P'4) in which it interconnects its braking branch port (70A) and its feed branch port (70C), and a neutral position (P'3) in which it interconnects its braking branch port (70A) and its return duct port (70D).

12. A system according to any one of claims 1 to 11, **characterised in that** the fluid feed duct (52) is connected to an outlet orifice of a pump (P), and **in that** the fluid return duct (54) is connected to an inlet orifice of said pump (P).

13. A system according to any one of claims 1 to 12, **characterised in that** the first and second braking means (14, 16) are disposed in the brake release chamber.

## Patentansprüche

1. System zum Bremsen eines Rotors (10) gegenüber einem Stator (12), umfassend erste Bremsmittel (14), die mit dem Rotor fest verbunden sind, zweite Bremsmittel (16), die mit dem Stator fest verbunden sind, einen Bremskolben (18), der in der Lage ist, eine Bremslösestellung (G) und eine Bremsstellung (F), in der er die ersten und die zweiten Bremsmittel in Bremskooperation zu bringen versucht, einzunehmen, wobei das System ferner elastische Rückstellmittel (20), die den Bremskolben (18) ständig in seine Bremsstellung (F) zu bringen versuchen, eine Bremskammer (26), die in der Lage ist, mit einem unter Druck gestellten Fluid versorgt zu werden, um den Bremskolben in seine Bremsstellung (F) zu bringen, eine Bremslösekammer (22), die in der Lage ist, mit einem unter Druck gestellten Fluid versorgt zu werden, um den Bremskolben in seine Bremslösestellung (G) zu bringen und Steuerungsmittel der Fluidversorgung der Kammern, umfaßt,
**dadurch gekennzeichnet, daß** die Bremskammer (26) und die Bremslösekammer (22) durch eine Verbindungsleitung (38, 38', 38") verbunden sind, die dazu dient, eine Zirkulation des Fluids in einer Stellung unterstützten Bremsens (P1; P'1, P'4), in der die Bremskammer (26) mit einer Versorgungsleitung des Fluids verbunden ist, während die Bremslösekammer (22) mit einer Fluidrückflussleitung verbunden ist, zu erzeugen, und, daß die Verbindungsleitung mit Mitteln (40, 36, 36', 36") zum Begrenzen der Zirkulation des Fluids in der Leitung, mindestens in die Richtung, die von der Bremslösekammer zur Bremskammer verläuft, versehen ist.

2. System nach Anspruch 1, **dadurch gekennzeichnet, daß** die Mittel zum Begrenzen der Zirkulation des Fluids ein Rückschlagventil (40, 38B, 38'B, 37"A) umfassen, das nur die Zirkulation des Fluids in die Richtung von der Bremskammer (26) zur Bremslösekammer (22) erlaubt.

3. System nach einem der Ansprüche 1 oder 2, **dadurch gekennzeichnet, daß** es eine Einengung (36, 36', 36") umfaßt, die in der Verbindungsleitung (38, 38', 38"), zwischen der Bremskammer und der Bremslösekammer, angeordnet ist.

4. System nach einem der Ansprüche 2 oder 3, **dadurch gekennzeichnet, daß** die Einengung (36, 36', 36") und das Ventil (40, 38B, 38'B, 37"A) in Reihe in der Verbindungsleitung (38, 38', 38") angeordnet sind.

5. System nach einem der Ansprüche 1 bis 4, **dadurch gekennzeichnet, daß** die Verbindungsleitung (38, 38', 38") in dem Bremskolben (18) angeordnet ist.

6. System nach einem der Ansprüche 1 bis 5, **dadurch gekennzeichnet, daß** die elastischen Rückstellmittel (20) in der Bremskammer (26) angeordnet sind.

7. System nach einem der Ansprüche 1 bis 6, **dadurch gekennzeichnet, daß** die Steuerungsmittel (50) der Fluidversorgung der Bremskammer (26) und der Bremslösekammer (22) in der Lage sind, eine Konfiguration unterstützten Bremsens (P1; P'1, P'4), in der die Bremskammer (26) mit der Fluidversorgungsleitung (52) kommuniziert (28), während die Bremslösekammer (22) mit der Fluidrückflussleitung (54) kommuniziert, eine Bremslösekonfiguration (P2; P'2, P'3), in der die Bremslösekammer (22) mit der Fluidversorgungsleitung (52) kommuniziert, und eine Konfiguration einfachen Bremsens (P3; P'1, P'3) zu steuern, in der die Bremslösekammer (22) mit einem Fluidrückfluß (54) kommuniziert, während die Bremskammer (26) von der Versorgungsleitung isoliert ist.

8. System nach Anspruch 7, **dadurch gekennzeichnet, daß** es Mittel (80, 80') umfaßt zum Detektieren eines Parameters, der mit der Viskosität des Fluids in der Bremslösekammer (22) verknüpft ist, und Mittel zur Steuerung des Bremsens in der Konfiguration unterstützten Bremsens (P1; P'1, P'4), wenn der detektierte Parameter für eine Viskosität bezeichnend ist, die größer ist als eine gegebene Viskosität, und zur Steuerung des Bremsens in der Konfiguration einfachen Bremsens (P3; P'1, P'3), wenn der Parameter für eine Viskosität bezeichnend ist, die kleiner ist als die gegebene Viskosität.

9. System nach Anspruch 8, **dadurch gekennzeichnet, daß** es Mittel (80, 80') zum Detektieren eines Parameters, der unter der Temperatur des Fluids, einem Druckverlust und der Temperatur eines Teils des Systems, das mit dem Fluid in Kontakt ist, gewählt ist.

10. System nach einem der Ansprüche 7 bis 9, **dadurch gekennzeichnet, daß** die Steuerungsmittel der Fluidversorgung der Bremskammer (26) und der Bremslösekammer (22) ein Ventil (50) mit drei Stellungen umfassen, das einen Bremsweg (50A) aufweist, der ständig mit der Bremskammer (26) verbunden ist, einen Bremslöseweg (50B), der ständig mit der Bremslösekammer (22) verbunden ist, einen Versorgungsweg (50C), der ständig mit der Fluidversorgungsleitung (52) verbunden ist und einen Rückflußweg (50D), der ständig mit der Fluidrückflußleitung (54) verbunden ist, umfaßt und, daß dieses Ventil in der Lage ist, eine Stellung unterstützten Bremsens (P1), in der der Bremsweg (50A) mit dem Versorgungsweg (50C) verbunden ist, während der Bremslöseweg (50B) mit dem Rückflußweg (50D) verbunden ist, eine Bremslösestellung (P2), in der der Bremslöseweg (50B) mit dem Versorgungsweg (50C) verbunden ist, während der Bremsweg (50A) mit dem Rückflußweg (50D) verbunden ist, und eine Stellung einfachen Bremsens (P3) einzunehmen, in der der Bremslöseweg (50B) mit dem Rückflußweg (50D) verbunden ist, während der Versorgungsweg (50C) isoliert ist.

11. System nach einem der Ansprüche 7 bis 9, **dadurch gekennzeichnet, daß** die Steuerungsmittel der Fluidversorgung der Bremskammern (26) und Bremslösekammern (22) ein erstes Ventil (60) umfassen, das einen Bremsweg (60A), der ständig mit der Bremskammer (26) verbunden ist, einen Bremslöseweg (60B), der ständig mit der Bremslösekammer (22) verbunden ist, einen Versorgungsweg (60C), der ständig mit der Fluidversorgungsleitung (52) verbunden ist und einen Rückflußweg (60D) umfassen, der ständig mit der Fluidrückflußleitung (56) verbunden ist, sowie ein zweites Ventil (70), das einen Bremsumleitweg (70A), der ständig mit der Bremskammer (26) verbunden ist, einen Versorgungsumleitweg (70C), der ständig mit der Fluidversorgungsleitung (52) verbunden ist und einen Rückflußleitweg (70D) aufweist, der mit einer Fluidrückflußleitung (56) verbunden ist, und, daß das erste Ventil (60) in der Lage ist, eine Bremsstellung (P'1), in der es seine Bremslöse- (60B) und Rückflußwege (60D) verbindet und gleichzeitig die Brems- (60A) und Versorgungswege (60C) isoliert und eine Bremslöseposition (P'2), in der es seine Brems- (60) und Rückflußwege (60D) verbindet und seine Bremslöse- (60B) und Versorgungswege (60C) verbindet, einzunehmen, während das zweite Ventil (70) in der Lage ist, eine Bremsunterstützungsstellung (P'4), in der es seine Brems- (70A) und Versorgungsumleitwege (70C) verbindet, und eine neutrale Stellung (P'3), in der es seine Brems- (70A) und Rückflußumleitwege (70D) verbindet, einzunehmen.

12. System nach einem der Ansprüche 1 bis 11, **dadurch gekennzeichnet, daß** die Fluidversorgungsleitung (52) mit einer Ausstoßöffnung einer Pumpe (P) verbunden ist und, daß die Fluidrückflußleitung (54) mit einer Ansaugungsöffnung der Pumpe (P) verbunden ist.

13. System nach einem der Ansprüche 1 bis 12, **dadurch gekennzeichnet, daß** die ersten und zweiten Bremsmittel (14, 16) in der Bremslösekammer angeordnet sind.
